# EUROPEAN PATENT APPLICATION

(11) **EP 4 563 314 A1**
(43) Date of publication of application: **04.06.2025**
(21) Application number: 24214870.8
(22) Date of filing: 22.11.2024
(51) Int. Cl.: B29B 17/00, B29B 17/02, B29B 17/04, B29C 48/275, B29C 48/00, B29C 48/09, B29C 48/285, B29C 48/395, B29C 48/92, B29K 105/26

(54) **SYSTEM FOR THE RECOVERY AND REUSE OF PLASTIC MATERIALS IN THE MANUFACTURING OF EXTRUDED PRODUCTS**

(30) Priority: 30.11.2023 IT 202300025497
(71) Applicant: Plastofer S.r.l., 00135 Roma (RM) (IT)
(72) Inventor: TEMPESTA, Massimo, I-00135 ROMA (RM) (IT)
(74) Representative: Fiammenghi, Eva

(57) **Abstract**

System for the recovery and reuse of plastic materials in the manufacturing of extruded products, suitable for allowing the optimization of the consumption of the materials to be inserted inside the extruder commonly employed for making extruded products; said system comprising at least one double dispenser, suitable for mixing the virgin plastic granules, with the recycled plastic granules coming from preceding extrusions; said double dispenser further proving to be suitable for inserting, within the extruder, a percentage of recycled plastic lower than 10% of the total quantity of plastic used, in order to give high mechanical properties to the extruded products manufactured; such double dispenser further proving to be suitable for introducing, within the extruder, a percentage of colored plastic granules, based on the commands received from a microprocessor, with the aim of giving the extruded products manufactured the color desired by customers.

## Description

### Field of the art

The invention refers to an innovative system for recycling plastic materials that are commonly discarded following extrusion processes, which are suitable for being re-inserted within the extruder, following a treatment that has been preset by the system, object of the invention.

### Prior art

Extrusion is an industrial process used for creating objects with defined cross sections, such as pipes, sections, sheets and other similar products, by pushing a material through a die or a mold. This process is widely used in the manufacturing industry for the production of objects with constant shape and with a practically unlimited length.

During the extrusion, however, at the present state of the art, there is quite clearly the presence of a waste material known as "extruded product waste" or "extrusion waste". This is a type of undesired residual material that is formed during the extrusion process. The type and quantity of extruded product waste can vary based on the extruded material, on the geometry of the product and on the precision of the process.

During the start of the extrusion process and during the turning-off phase, waste material can be generated. Often, the initial and final material does not have the same properties as the extruded product since it can contain contaminants.

The production of waste material further occurs during the initial implementation of the extrusion process, when test or discard pieces are produced until the process is not adjusted for producing the desired product. Such initial pieces must generally be discarded.

Also in the final process phase, waste material can be produced, given that the extruded product obtained can be cut into pieces of specific size, generating small waste pieces, known as scraps or cutouts.

In addition, if one passes from one material to another or from one color to another, waste can be produced due to the transition of material and color.

Following all of these processing activities, considering the general economy of a company that produces extruded products, it is clear just how important the recycling is of such plastic materials, in order to optimize consumption, limiting the waste of plastic material.

Not even the utility model CN219486472, published on 8 August 2023, resolves the aforesaid problems since it describes a recycling plant of an injection molding machine, suitable for meticulously inserting only the quantity of liquid necessary for the formation of the object to be molded, without at all providing for the reuse of the previously polymerized waste plastic materials.

Therefore, the object of the patent is that of claiming a system suitable for treating the waste plastic materials, by newly using them in the extrusion process, following a mixing with the new plastic materials.

### Description of the invention

According to the present invention, a system is attained for the recovery and reuse of plastic materials that effectively solves the abovementioned problems.

The system for the recovery and reuse of plastic materials, object of the invention, is suitable for allowing an advantageous savings of raw materials, following the manufacturing of extruded products obtained by means of extrusion.

The extrusion process is in fact suitable for generating considerable quantities of waste plastic material, which, if not reused, involves the consumption of great quantities of plastic.

The present recovery system has proven suitable for treating such waste materials, shredding them and mixing them within a well determined quantity of virgin material, ensuring a high level of hardness and strength, while employing a percentage of recycled materials.

Said system of course uses an extruder, comprising at its interior a worm screw and a plurality of electrical resistors, suitable for conferring the shape of an extruded product to the plastic material inserted therein, modifying its shape and the size based on the production requests; said extruder, at the end of the process, produces a certain quantity of waste plastic material, which is capable of being removed from the extruded products produced and subsequently treated, before being reinserted in the manufacturing process.

A shredder is capable of returning the newly obtained waste plastic material, in granular form, facilitating the subsequent extrusion processes.

Downstream of said shredder, at least one automatic sieve is installed that is capable of removing possible impurities present within the quantity of newly obtained plastic granules, facilitating a quality manufacturing in subsequent extrusion processes.

In one embodiment thereof, said automatic sieve is capable of removing the impurities present within the recycled plastic granules, employing a plurality of grids interchangeable with each other, depending on the size of the treated granules.

By way of a non-limiting example, the removal of the impurities that risk contaminating the subsequent processing activities is performed by a centrifuge suitable for carrying out a washing of the granules, following the cleaning passage of the aforesaid automatic sieve.

In order to convey the recycled plastic granules, within a plurality of tanks, at least one diverter is employed, adapted to divide the recovered plastic by color during the extrusion phases.

Said diverter, in one embodiment thereof, is adapted to divide the received granules by size, respecting several size ranges preset by means of said microprocessor, in order to separate the smaller granules from the larger ones, thus obtaining a subsequent manufacturing of extruded products with granules that are homogenous to each other.

Subsequently, a double dispenser is suitable for allowing the insertion of the plastic granules within the extruder, automatically managing the dosage of recycled plastic coming from the preceding extrusions, suitably mixing the virgin plastic with the recycled plastic, hence obtaining an entirely reliable and strong plastic mix. Said double dispenser is connected to the plurality of tanks, in order to pick up the plastic granules of the desired color, obtaining the color gradation requested by the customer in the extrusion process.

Said recycled plastic granules are capable of reaching the double dispenser due to the use of a compressor, which ensures the suction of the desired quantity of granules.

The double dispenser can further vary the quantity of granules inserted inside the extruder during the same manufacturing, in order to collaborate with the creation of extruded products characterized by different thicknesses along their same span.

By way of a non-limiting example, the dispenser comprises at its interior at least one mixing chamber, within which the newly mixed granules are contained, employing both the virgin plastic material and the recycled material. Said mixing chamber allows introducing, within the extruder, the plurality of granules that are already mixed well together, in order to prevent possible accumulation of recycled granules at the same point.

In one embodiment thereof, the double dispenser comprises an interchangeable granule insertion nozzle, in order to allow, with a large nozzle, the insertion of large quantities of plastic material if it is necessary to make thick and rigid extruded products; if the manufacturing of thin and light extruded products is requested, it will be sufficient to apply an insertion nozzle that is smaller than the preceding.

Above said double dispenser, a hopper is arranged that is adapted to contain at its interior the virgin plastic granules, which are adapted to fall by gravity within the double dispenser, based on the manufacturing needs.

A microprocessor is able to communicate with said double dispenser, managing the color and the thickness of the extruded products during production, based on the settings established during the programming phase of the extrusion process. Said microprocessor is therefore suitable for facilitating the creation of pipes that possess different thicknesses, with the aim of limiting the diffusion of heat at several very precise points of such pipes.

By way of a non-limiting example, said microprocessor is capable of sending a notification signal on the smartphone of a registered operator, in order to keep him/her updated on developments in the manufacturing of extruded products, making him/her aware of the percentages of recycled plastic material inserted inside the extruder.

The present extrusion process can be advantageously remotely monitored, by employing a control unit adapted to communicate with said microprocessor in wireless mode.

The advantages offered by the present invention are evident in light of the description set forth up to now and will be even clearer due to the enclosed figures and detailed description.

### Description of the figures

The invention will be described hereinbelow in at least one preferred embodiment as a non-limiting example, in which:

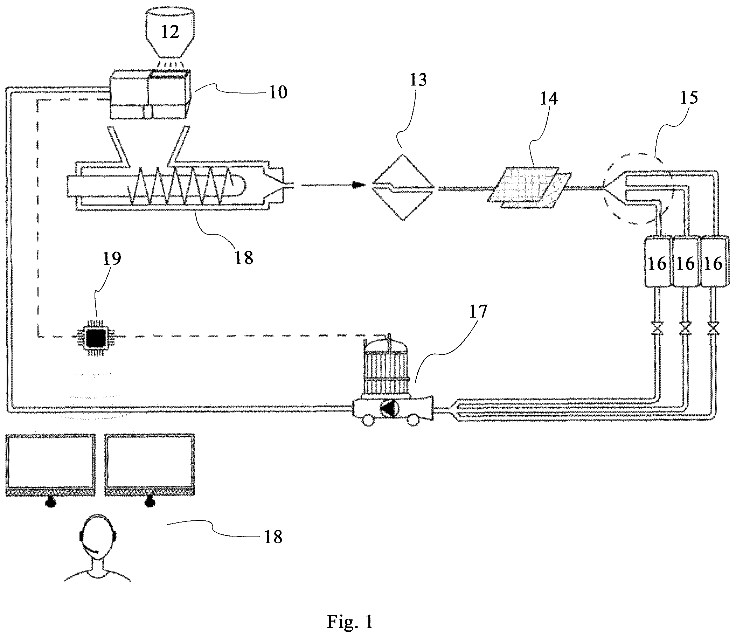

- FIGURE 1 shows an illustrative diagram adapted to describe the operation of the system for the recovery and reuse of the metal materials, object of the invention. More particularly, figure 1 shows the order of installation of the plurality of components suitable for recycling the waste plastic materials produced by extrusion. All the components of said recovery system are advantageously suitable for being remotely monitored.

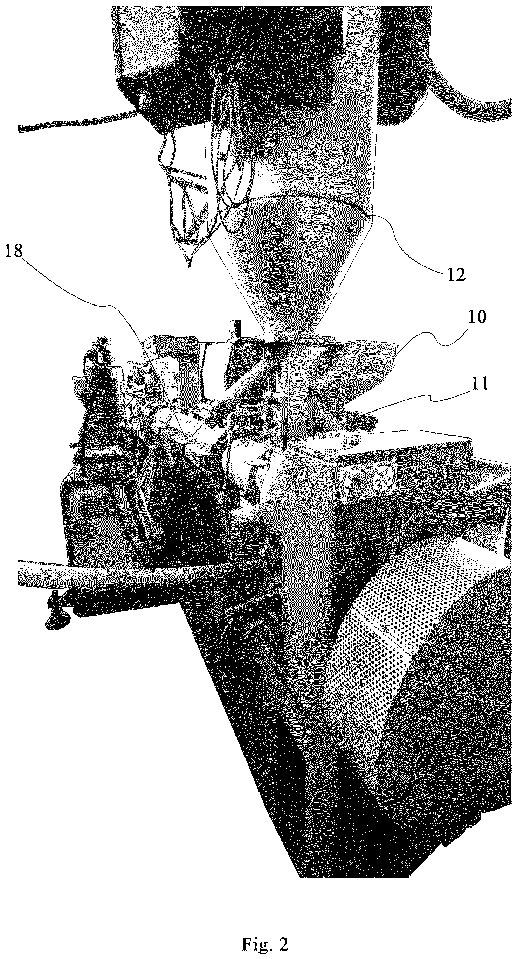

- FIGURE 2 instead shows the view of a prototype suitable for performing the functions of the recovery and reuse system described in the present patent application; more particularly, there is clearly the presence of a double dispenser 10 suitable for mixing the recycled plastic granules with the virgin plastic granules.

### Detailed description of the invention

The present invention will now be illustrated as a merely non-limiting or non-binding example, with reference to the figures which illustrate several embodiments relative to the present inventive concept.

With reference to FIG. 1, the descriptive diagram is illustrated of the plant that enables the recovery and the reuse of the waste plastic material derived from the extrusion process of any one extruded product.

The waste plastic material, indeed, once removed from the manufactured product, is adapted to be divided into granules due to the use of a shredder 13.

The obtained granules must be subsequently filtered and washed, employing at least one automatic sieve 14, which has the object of removing each type of impurity, such as for example dust and manufacturing residues.

Said granules, once cleaned, are sorted by a diverter 15, within suitable tanks 16, which have the task of maintaining separate from each other the granules characterized by different color gradations.

A microprocessor 19 is suitable for managing the flow of granules from the tanks 16 to said double dispenser 10, by starting a compressor 17 which has the purpose of sucking the granules of the desired color gradation.

Above said double dispenser 10, a hopper 12 is arranged which is adapted to dispense new, hence virgin, plastic granules.

The virgin plastic is then mixed with the recycled plastic granules, within a mixing chamber 11, before being introduced within the extruder 18 for the manufacturing of extruded products. Said microprocessor 19 is able to communicate in wireless mode with any one control unit 20, so as to render the system, object of the invention, entirely remotely monitorable.

With reference to FIG. 2, the prototype is illustrated that is designed for executing the operations of the system for the recovery and reuse of plastic materials, object of the invention. In the present figure, there is clearly the presence of a double dispenser 10, suitable for mixing, due to a suitable mixing chamber 11, the granules of virgin plastic material coming from hopper 12 and the granules of recycled plastic material. Said granules, once mixed together, are adapted to be inserted within the extruder 18, which, by means of a worm screw and by means of a plurality of resistors, is suitable for manufacturing an extruded product meeting the requests of the customer, respecting the necessary physical properties.

Finally, it is clear that modifications, additions or variations that are obvious for the man skilled in the art can be made to the invention described up to now, without departing from the protective scope that is provided by the enclosed claims.

## Claims

1. System for the recovery and reuse of plastic materials in the manufacture of extruded products **characterized in that** it allows the optimization of the consumption of materials to be inserted internally into a common extruder (18) used for the production of extruded products; said system comprising at least a double dispenser (10), suitable for mixing the virgin plastic granules with the recycled plastic granules coming from previous extrusions; said double dispenser (10) further proving to be suitable for inserting inside the extruder (18) a percentage of recycled plastic lower than 10% of the total quantity of plastic used, in order to give high mechanical properties to the extruded products manufactured; this double dispenser (10) further proving to be suitable for introducing a percentage of colored plastic granules into the extruder (18), based on the commands received from a microprocessor (19), with the aim of giving the extruded articles manufactured the color desired by customers; said system of recovery and reuse of plastic materials including:
- at least one extruder (18), compri sing inside it a worm screw and a plurality of electrical resistors, capable of giving the shape of an extruded product to the internally inserted plastic material, modifying its shape and size based on production requests; said extruder (18), at the end of the process, being capable of producing a certain quantity of waste plastic material, which is capable of being removed from the extruded products produced and subsequently treated before being reinserted into the manufacturing process;
- at least one shredder (13), capable of returning the newly obtained waste plastic material in granular form, allowing its use in subsequent extrusion processes;
- at least one automatic sieve (14), installed downstream of said shredder (13), capable of removing any impurities present within the quantity of newly obtained plastic granules, favoring quality manufacturing in the subsequent extrusion processes;
- at least one diverter (15), designed to convey the recycled plastic granules into a plurality of tanks (16), in order to divide the plastic recovered by color during the extrusion phases;
- at least one double dispenser (10), designed to allow the insertion of plastic granules inside the extruder (18), automatically managing the dosage of recycled plastic coming from previous extrusions, in order to mix the virgin plastic with recycled plastic, obtaining a completely reliable and resistant plastic mix; said double dispenser (10) being further connected to the plurality of tanks (16), in order to pick up the plastic granules of the desired color, obtaining the color gradation requested by the customer; said recycled plastic granules being capable of reaching the double dispenser (10) thanks to a compressor (17), capable of sucking the desired quantity of granules; said double dispenser (10) further proving capable of varying the quantity of granules inserted inside the extruder (18), during the same manufacturing process, allowing the creation of extruded products **characterized by** different thicknesses along their span;
- at least one hopper (12), arranged above said double dispenser (10), suitable for containing the virgin plastic granules inside it, which are capable of falling by gravity inside the double dispenser (10), based on to manufacturing needs;
- at least one microprocessor (19) able to communicate directly with said double dispenser (10), in order to manage the color and thickness of the extruded articles produced, based on the settings established during the programming phase of the extrusion process; said microprocessor (19) being therefore suitable for facilitating the creation of pipes having different thicknesses, with the aim of diversifying the diffusion of heat on some specific areas of the pipes;
- at least one control unit (20), positioned remotely, capable of monitoring the extrusion process and the related system for recovery and reuse of plastic materials, communicating with said microprocessor (19).

2. System for the recovery and reuse of plastic materials in the manufacture of extruded products, according to the preceding claim 1, **characterized in that** said automatic sieve (14) is suitable for removing the impurities present inside the recycled plastic granules, using a plurality of grids interchangeable with each other, depending on the size of the granules treated.

3. System for the recovery and reuse of plastic materials in the manufacture of extruded products, according to any of the preceding claims, **characterized in that** for the removal of impurities that risk contaminating subsequent processes, a centrifuge is used to carry out a washing of the granules, following passage through the automatic sieve (14).

4. System for the recovery and reuse of plastic materials in the manufacture of extruded products, according to any of the preceding claims, **characterized in that** said diverter (15) is further suitable for dividing the granules received by size, respecting some size ranges preset by said microprocessor (19), in order to separate the smaller granules from the larger ones, thus obtaining a subsequent manufacture of extrudates with granules that are homogenous to each other.

5. System for the recovery and reuse of plastic materials in the manufacture of extruded products, according to any of the preceding claims, **characterized in that** said dispenser (10) includes inside at least one mixing chamber (11), inside which freshly mixed granules are contained, using both virgin and recycled plastic material; said mixing chamber (11), thus allowing the plurality of granules already mixed together to be introduced into the extruder (18), in order to avoid any accumulation of recycled granules in the same point.

6. System for the recovery and reuse of plastic materials in the manufacture of extruded products, according to any of the preceding claims, **characterized in that** said double dispenser (10) includes an interchangeable granule insertion nozzle, in order to allow the insertion of large quantities of plastic material if it was necessary to create thick and rigid extrusions; said insertion nozzle can also be smaller in size to modulate the insertion of the granules inside the extruder (18), creating thin and light extrudates.

7. System for the recovery and reuse of plastic materials in the manufacture of extruded products, according to any of the preceding claims, **characterized in that** said microprocessor (19) is capable of sending a notification signal to the smartphone of a registered operator, in order to keep him/her updated on developments in the manufacturing of extruded products, making him/her aware of the percentages of recycled plastic material inserted inside the extruder (18).
